# EUROPEAN PATENT APPLICATION

(11) **EP 3 603 467 A1**
(43) Date of publication of application: **05.02.2020**
(21) Application number: 17901895.7
(22) Date of filing: 28.08.2017
(51) Int. Cl.: A47J 47/01, A47J 47/02, A47J 36/00

(54) **FILM TEARING AND MATERIAL FEEDING MECHANISM**

(30) Priority: 23.03.2017 CN 201710179055
(71) Applicant: Shenzhen Fanlai Technology Co., Ltd., Shenzhen, Guangdong 518000 (CN)
(72) Inventor: MA, Long, Shenzhen Guangdong 518000 (CN); FANG, Feicun, Shenzhen Guangdong 518000 (CN)
(74) Representative: dompatent von Kreisler Selting Werner - Partnerschaft von Patent- und Rechtsanwälten mbB
(86) International application number: PCT/CN2017/099286
(87) International publication number: WO 2018/171121

(57) **Abstract**

A film-uncovering and material-feeding mechanism for feeding food materials to a cooking pot (4) includes a food material box (1), a film-uncovering assembly (3), and a connection housing assembly (5) configured to support the food material box (1) and the film-uncovering assembly (3). The connection housing assembly (5) is provided with a feed port configured to feed a food material into a cooking pot (4). The food material box (1) includes a box body (11) movably connected to the connection housing assembly (5) and configured to accommodate the food material and a seal film (12) provided between the box body (11) and the connection housing assembly (5) and configured to seal the box body (11). The seal film (12) is provided with a hitching opening (121). The film-uncovering assembly (3) includes a film-uncovering rotation shaft (31) and a drive device (32) configured to drive the film-uncovering rotation shaft (31) to rotate. The film-uncovering rotation shaft (31) is provided with a hook (311) configured to be hitched with the hitching opening (121) to uncover the seal film (12) via rotation and to drive the box body (11) to move towards the feed port. In the present disclosure, automatic film tearing and material feeding of the configured food material box is realized, which facilitates to control the food material feeding of the food material box, and feeding all food materials in one go can be avoided, which helps to enhance the taste of the dishes and to provide better, and the user has good experience.

## Description

### Technical Field

The invention relates to the technical field of cooking, and in particular to a film-uncovering and material-feeding mechanism.

### Background

In order to alleviate people's labor intensity, reduce the damage of kitchen fumes to the body, protect human health and improve people's quality of life to improve people's living standards and nutritional structure, people's demand for automatic cooking device is becoming more and more urgent.

However, most of the traditional cooking devices do not have the function of automatically feeding material, and need for manual intervention for the material feeding, or need the user to prepare the materials and configure the material first, then to put the configured food materials in the material box, and then to manually control the material box to feed the food materials into the cooking pot. As an improvement, an automatic cooking machine has been invented, seeing the Chinese patent with the patent No. CN204378845U. In the patent, the main food materials and auxiliary food materials are prepared and respectively placed in the corresponding structure of the cooking assembly for cooking the main food materials and the corresponding structure of the cooking assembly for cooking the auxiliary food materials before cooking, and then the feed of the food materials are respectively performed. However, in the prior art, following technical problems still exist: the structure of the cooking machine is complicated, and it is not convenient to control the material box which has been well-configured sealed to feed the food materials, and the taste of the dishes is poor as all food materials are fed in one go, which makes the user experience poor.

### SUMMARY

### Technical Problem

In the present disclosure, a film-uncovering and material-feeding mechanism is provided to solve the technical problem that it is inconvenient for the conventional cooking device to control the material box to feed the food materials and the user experience is poor.

### Technical Solutions

To realize the above purpose, in the present disclosure, it is provided a film-uncovering and material-feeding mechanism which includes a food material box, a film-uncovering assembly and a connection housing assembly configured to support the food material box and the film-uncovering assembly. The connection housing assembly is provided with a feed port configured to feed a food material into the cooking pot; the food material box includes a box body movably connected to the connection housing assembly and configured to accommodate the food material and a seal film provided between the box body and the connection housing assembly and configured to seal the box body, the seal film is provided with a hitching opening; and the film-uncovering assembly includes a film-uncovering rotation shaft and a drive device configured to drive the film-uncovering rotation shaft to rotate, and the film-uncovering rotation shaft is provided with a hook configured to be hitched with the hitching opening to uncover the seal film via rotation and to drive the box body to move towards the feed port.

Some preferred technical solutions of the present disclosure are as follows.

Further, the film-uncovering assembly further comprises a shaft sleeve connected to the film-uncovering rotation shaft, a clutch connected to the drive device, and a first holder connected to the connection housing assembly and configured to secure the shaft sleeve and the clutch, and the drive device drives the clutch to rotate in a forward or reverse direction to cause the clutch to be engaged with or disengaged from the shaft sleeve.

Further, the clutch includes a clutch shaft rod, a clutch nut that is screw-fitted with the clutch shaft rod and a second holder configured to secure the clutch nut, and the second holder is mounted on the first holder.

Further, the shaft sleeve includes an inner sleeve configured to secure the film-uncovering rotation shaft and a movable sleeve fitted in the inner sleeve and configured to be connected with or disengaging from the clutch shaft rod, and a spring is provided between the inner sleeve and the movable sleeve.

Further, the box body includes a plurality of sub-boxes that are independent from one another and of different volumes.

Further, the connection housing assembly is provided with an infrared sensor for triggering and positioning the food material box, and the infrared sensor includes an infrared emitter and an infrared receiver.

Further, the connection housing assembly includes a first housing and a second housing sleeved outside the first housing, the first housing is provided with a first feed port, the second housing is provided with a second feed port corresponding to the first feed port, the food material box is movably connected to the second housing, and the cooking pot is connected below the first housing and the second housing.

Further, the first housing is provided with an extension plate configured to be connected with the second housing, and the extension plate is provided with a connection pin and a connection lug for fixing the second housing.

Further, the second housing is provided with a guide groove configured to be slidingly engaged with the food material box, and the second feed port is opened at one end of the guide groove.

Further, an output shaft of the drive device is fitted with a pin and another end of the pin is connected to the clutch to transmit the rotation power of the drive device to the clutch.

Further, one end of the clutch shaft rod engaging with the output shaft of the drive device is provided with a notch that cooperates with the pin, and the other end of the clutch shaft rod is provided with a guide cylinder.

Further, the hook includes a penetration rod passing through the film-uncovering rotation shaft, and an end of the penetrating rod is provided with a hitch groove.

Further, the drive device is a speed reduction motor, and an output torque of the speed reduction motor ranges from 2kgf.cm to 14kgf.cm.

Further, the clutch nut is a hex nut, an outer ring of the clutch shaft rod has an external thread, and the hex nut has an internal thread matching with the external thread.

Further, the hook is arranged at the intermediate section of the film-uncovering rotation shaft and the position of the hitching opening corresponds to the position of the hook.

### Beneficial Effect

Compared to the prior art, in the film-uncovering and material-feeding mechanism according to an embodiment of the present disclosure, the drive device 32 drives the film-uncovering rotation shaft to rotate, and the hook on the film-uncovering rotation shaft is hitched to the hanging opening in the seal film to uncover the seal film via rotation. Meanwhile, the seal film drives the box body to move towards the feed port to perform material-feeding. After the film is torn, the food material can be automatically input into the cooking pot from the feed port due to its own gravity. In the film-uncovering and material-feeding mechanism, automatic film uncovering and material feeding of the configured food material box 1 can be realized. The film-uncovering and material-feeding mechanism has a simple structure. By using the film-uncovering rotation shaft to uncover the sealing film via rotation, the material-feeding control of the food material box can be facilitated. And as the film-uncovering rotation shaft drives the food material box to move towards the feed port during the rotation, feeding all food materials in one go can be avoided, which is helpful to enhance the taste of the dishes, and the user has good experience.

### BRIEF DESCRIPTION OF THE DRAWINGS

In order to more clearly illustrate the technical solutions in the embodiments of the present disclosure, the drawings used in the description of the embodiments will be briefly described below. It is obvious that the drawings in the following description are just some embodiments of the present disclosure, those skilled in the art can also obtain other drawings based on these drawings without paying any creative effort.
FIG. 1 is a schematic view showing the connection between a film-uncovering and material-feeding mechanism according to the first embodiment of the present disclosure and a cooking pot;
Fig. 2 is an exploded view of a film-uncovering and material-feeding mechanism according to the first embodiment of the present disclosure;
Fig. 3 is a front view showing the match of a food material box and a film-uncovering rotation shaft of a film-uncovering and material-feeding mechanism according to the first embodiment of the present disclosure;
Fig. 4 is a plan view showing the match of a food material box and a film-uncovering rotation shaft of a film-uncovering and material-feeding mechanism according to the first embodiment of the present disclosure;
Fig. 5 is a cross-sectional view of a film-uncovering assembly of a film-uncovering and material-feeding mechanism according to the first embodiment of the present disclosure;
Fig. 6 is an exploded view of a film-uncovering assembly of a film-uncovering and material-feeding mechanism according to the first embodiment of the present disclosure;
Fig. 7 is a schematic view showing the connection between a film-uncovering and material-feeding mechanism according to the second embodiment of the present disclosure and a cooking pot;
Fig. 8 is an exploded view of a film-uncovering and material-feeding mechanism according to the second embodiment of the present disclosure;
Fig. 9 is a front view showing the match of a food material box and a film-uncovering rotation shaft of a film-uncovering and material-feeding mechanism according to the second embodiment of the present disclosure;
Fig. 10 is a plan view showing the match of a food material box and a film-uncovering rotation shaft of a film-uncovering and material-feeding mechanism according to the second embodiment of the present disclosure;
Fig. 11 is a cross-sectional view of a film-uncovering assembly of a film-uncovering and material-feeding mechanism according to the second embodiment of the present disclosure;
Fig. 12 is an exploded view of a film-uncovering assembly of a film-uncovering and material-feeding mechanism according to the second embodiment of the present disclosure; and
FIG. 13 is an enlarged schematic view of portion "A" in FIG. 7, according to the second embodiment of the present disclosure.

### List of the reference characters:

In the figures: 1-food material box, 11-box body, 111-sub-box, 12-seal film, 121-hitching opening, 2-infrared sensor, 3- film-uncovering assembly, 31- film-uncovering rotation shaft, 311-hook, 3111-penetration rod, 3112-hitch groove, 32-drive device, 321-pin, 33-shaft sleeve, 331-inner sleeve, 332-movable sleeve, 333-spring, 34-clutch, 341-clutch shaft rod, 3411-notch, 3412-guide cylinder, 342-clutch nut, 343-second holder, 35-first holder, 4-cooking pot, 5-connection housing assembly, 51-first housing, 511- first feed port, 512-extension plate, 513-connection pin, 514-connection lug, 52-second housing, 521-second feed port, 522-guide groove.

### DESCRIPTION OF THE EMBODIMENTS

Embodiments of the present disclosure will be described in detail below, and examples of the embodiment are illustrated in the accompanying figures. In the description, an always unchanged reference number or similar reference numbers represent(s) identical or similar components or components having identical or similar functionalities. The embodiments described below with reference to the accompanying figures are illustrative and intended to illustrate the present disclosure, but should not be considered as any limitation to the present disclosure.

In the description of the present disclosure, it needs to be understood that, directions or location relationships indicated by terms such as "length", "width", "up", "down", "front", "rear", "left", "right", "vertical", "horizontal", "top", "bottom", "inside", "outside", and so on are the directions or location relationships shown in the accompanying figures, which are only intended to describe the present disclosure conveniently and simplify the description, but not to indicate or imply that an indicated device or component must have specific locations or be constructed and manipulated according to specific locations; therefore, these terms shouldn't be considered as any limitation to the present disclosure.

In addition, terms "the first" and "the second" are only used in describe purposes, and should not be considered as indicating or implying any relative importance, or impliedly indicating the number of indicated technical features. As such, technical feature(s) restricted by "the first" or "the second" can explicitly or impliedly comprise one or more such technical feature(s). In the description of the present disclosure, the term of "a plurality of' means two or more, unless there is additional explicit and specific limitation.

In the present disclosure, unless there is additional explicit stipulation and limitation, terms such as "mount", "connect with each other", "connect", "fix", and so on should be broadly interpreted, for example, "connect" can be interpreted as being fixedly connected, detachably connected, or connected integrally; "connect" can also be interpreted as being mechanically connected or electrically connected; "connect" can be further interpreted as being directly connected or indirectly connected through intermediary, or being internal communication between two components or an interaction relationship between the two components. For the one of ordinary skill in the art, the specific meanings of the aforementioned terms in the present disclosure can be interpreted according to specific conditions.

In order to make the purpose, the technical solution and the advantages of the present disclosure be clearer and more understandable, the present disclosure will be further described in detail below with reference to accompanying figures and embodiments.

In the present disclosure, it is provided a film-uncovering and material-feeding mechanism, which can realize automatic film uncovering and material feeding of the configured food material box 1, and feeding all food materials in one go can be avoided, which helps to enhance the taste of the dishes and to provide better, and the user has good experience. It should be noted that the film-uncovering and material-feeding mechanism according to the present disclosure is configured to automatically feed the food materials, and can be used for, but is not limited to, a stir fry machine, a blender, and a cooking machine.

### Embodiment 1

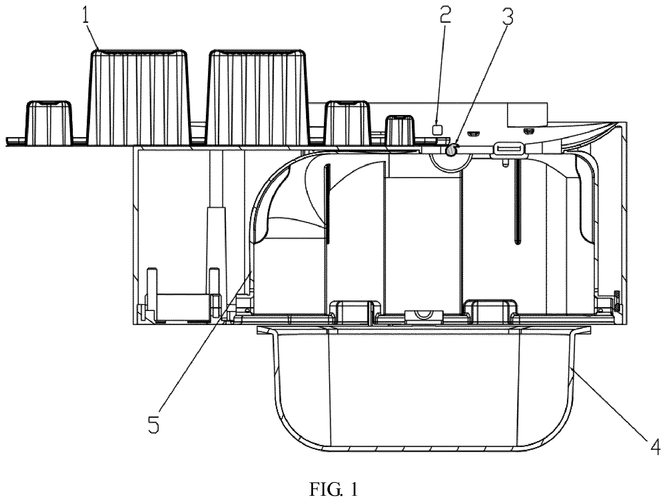

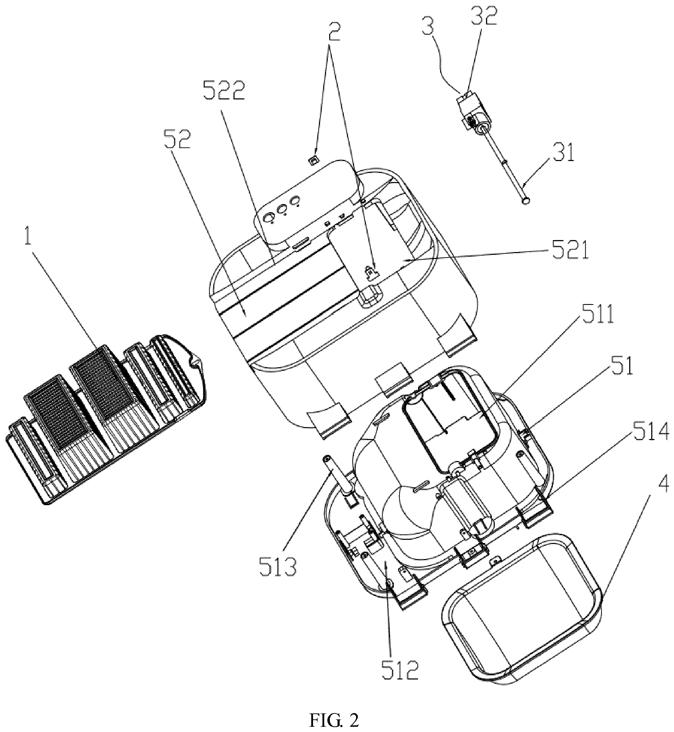

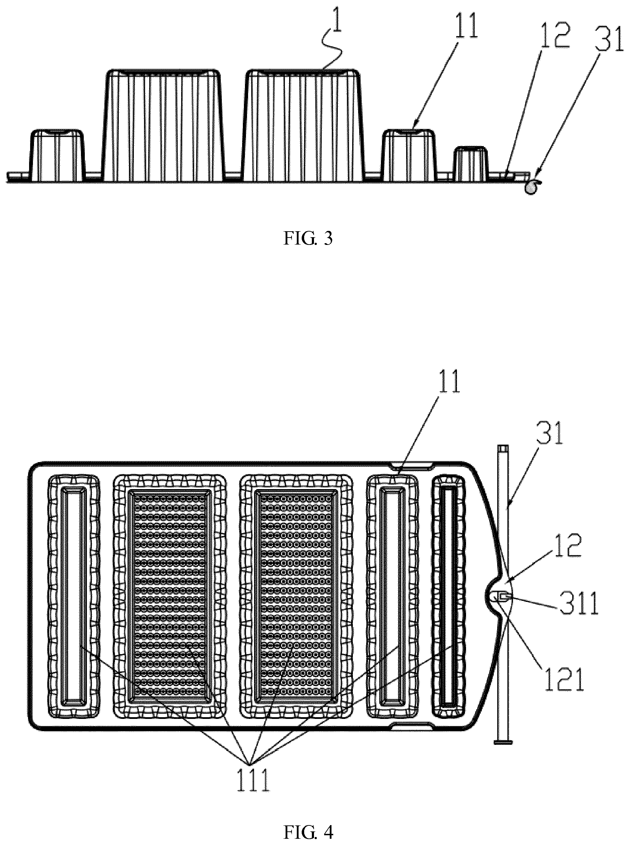

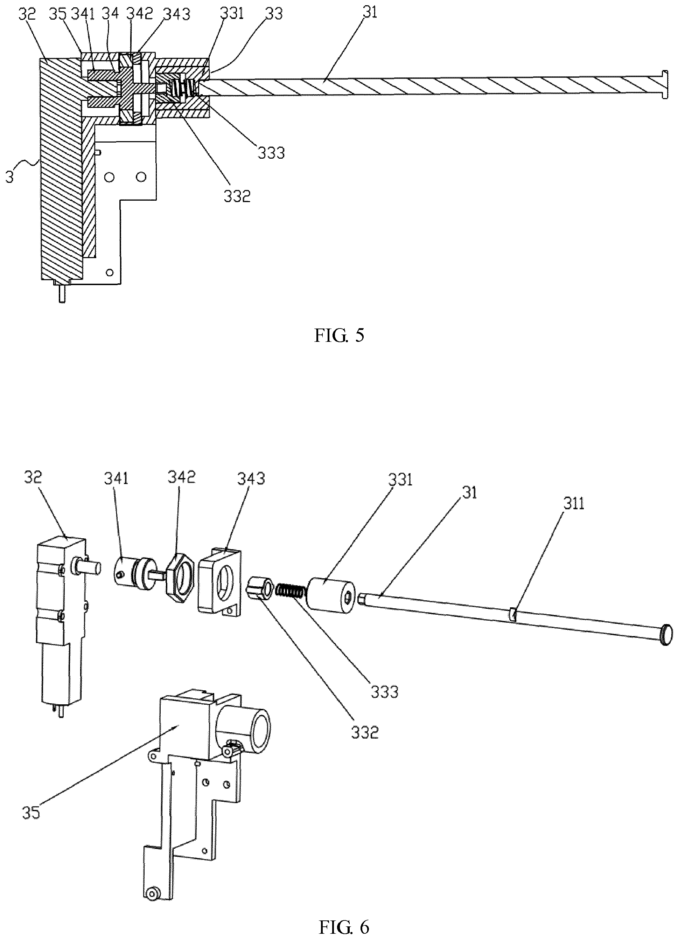

Referring to FIG. 1 to FIG. 6, the film-uncovering and material-feeding mechanism includes a food material box 1, a film-uncovering assembly 3, and a connection housing assembly 5 configured to support the food material box 1 and the film-uncovering assembly 3. The connection housing assembly 5 is provided with a feed port configured to feed a food material into a cooking pot 4. The food material box 1 includes a box body 11 movably connected to the connection housing assembly 5 and configured to accommodate the food material and a seal film 12 provided between the box body 11 and the connection housing assembly 5 and configured to seal the box body 11. The seal film 12 is provided with a hitching opening 121. The film-uncovering assembly 3 includes a film-uncovering rotation shaft 31 and a drive device 32 configured to drive the film-uncovering rotation shaft 31 to rotate. The film-uncovering rotation shaft 31 is provided with a hook 311 configured to be hitched with the hitching opening 121 to uncover or tear the seal film 12 via rotation and to drive the box body 11 to move towards the feed port.

In the film-uncovering and material-feeding mechanism according to an embodiment of the present disclosure, the drive device 32 drives the film-uncovering rotation shaft 31 to rotate, and the hook 311 on the film-uncovering rotation shaft 31 is hitched to the hanging opening 121 in the seal film 12 to uncover the seal film 12 via rotation. Meanwhile, the seal film 12 drives the box body 11 to move towards the feed port to perform material-feeding. After the film is torn, the food material can be automatically input into the cooking pot 4 from the feed port due to its own gravity. The film-uncovering and material-feeding mechanism has a simple structure. By using the film-uncovering rotation shaft 31 to uncover the sealing film 12 via rotation, the material-feeding control of the food material box can be facilitated. And as the film-uncovering rotation shaft 31 drives the food material box 1 to move towards the feed port during the rotation, feeding all food materials in one go can be avoided, which is helpful to enhance the taste of the dishes, and the user has good experience.

Preferably, in order to facilitate the retreat operation of the food material box 1 after the feeding, the film-uncovering assembly 3 further includes a shaft sleeve 33 connected to the film-uncovering rotation shaft 31, a clutch 34 connected to the drive device 32, and a first holder 35 connected to the connection housing assembly 5 and configured to secure the shaft sleeve 33 and the clutch 34. The drive device 32 drives the clutch 34 to rotate in a forward or reverse direction to cause the clutch 34 to be engaged with or disengaged from the shaft sleeve 33.

Specifically, the clutch 34 includes a clutch shaft rod 341, a clutch nut 51 that is screw-fitted with the clutch shaft rod 341 and a second holder 343 configured to secure the clutch nut 51. The second holder 343 is mounted on the first holder 35. The clutch nut 51 is a hex nut. In detail, the drive device 32 in this embodiment may be a speed reduction motor. The speed reduction motor is fixed to the first holder 35. It will be understood that the first holder 35 may also be expressed as a motor assembly holder. The shaft of the speed reduction motor is connected in the clutch shaft rod 341 to drive the clutch shaft rod 341 to rotate in the forward or reverse direction. The clutch hex nut is fixed to the second holder 343, and the second holder 343 is fixed to the first holder 35. The outer ring of the clutch shaft rod 341 has an external thread and matches with the hex nut having an internal thread.

Specifically, the shaft sleeve 33 includes an inner sleeve 331 configured to secure the film-uncovering rotation shaft 31 and a movable sleeve 332 fitted in the inner sleeve 331 and configured to be connected with or disengaging from the clutch shaft rod 341. A spring 333 is provided between the inner sleeve 331 and the movable sleeve 332. It can be understood that the movable sleeve 332 and the spring 333 are assembled in the inner sleeve 331. The inner sleeve 331 is connected to the film-uncovering rotation shaft 31, and the inner sleeve 331 is fixed on the first holder 35.

Further, through the designed clutch 34 and the forward and reverse rotation of the speed reduction motor, the engagement and the disengagement between the speed reduction motor and the film-uncovering rotation shaft 31 can be realized. After the feeding is completed, the motor is reversed, and the film-uncovering rotation shaft 31 is disengaged from the clutching shaft pin 341. The heat seal film wound on the film-uncovering rotation shaft 31 can be manually pulled out and the retreat operation of the food material box 1 can be completed. That is, when the speed reduction motor rotates forward, the clutch shaft rod 341 is driven to rotate forward, and clutch shaft rod 341 moves forward relative to the holder under the force from the threaded engagement with the hex nut to be connected with the movable sleeve 332 so as to rotate the film-uncovering rotation shaft 31. When rotating reversely, the speed reduction motor drives the clutch shaft rod 341 to rotate reversely, and the clutch shaft rod 341 moves backward relative to the second holder 343 to be disengaged from the movable sleeve 332. Thus, the film-uncovering rotation shaft 31 can freely rotate in the forward or reverse direction.

Preferably, the box body 11 includes a plurality of sub-boxes 111 that are independent from one another and of different volumes. Specifically, the box body 11 is divided into a plurality of independent sub-boxes 111 to realize segmented packaging of the food materials. The food materials can be taken out by uncovering the seal film. In addition, the sub-boxes 111 are of different volumes and can be configured to accommodate different food materials. The box body 11 is sealed by a heat seal film. The hitching opening 121 is opened at the front end of the seal film 12.

Further, the connection housing assembly 5 is provided with an infrared sensor 2 for triggering and positioning the food material box 1, and the infrared sensor 2 includes an infrared emitter and an infrared receiver. In detail, the drive device 32 drives the film-uncovering rotation shaft 31 to rotate, and the hook 311 of the film-uncovering rotation shaft 31 is hitched to the food material box 1, and then the infrared sensor 2 is triggered to perform positioning. It should be noted that the hook 311 of the film-uncovering rotation shaft 31 can be hitched with the food material box 1 in the manual or automatic manner according to actual needs. It should be noted that, in this embodiment, the hook 311 may be implemented using existing conventional means to implement the corresponding function. Further, in order to facilitate connection with the cooking pot 4 and the food material box 1 and to facilitate feeding, the connection housing assembly 5 includes a first housing 51 and a second housing 52 sleeved outside the first housing 51. It should be understood that alternatively the first housing 51 may be referred to as the inner housing of the cooking device, and the second housing 52 may be referred to as the outer housing of the cooking device. Specifically, the feed port includes a first feed port 511 and a second feed port 521. The first feed port 511 is provided in the first housing 51, and the second housing 52 is provided with a second feed port 521 corresponding to the first feed port 511. The food material box 1 is movably connected to the second housing 52, and the cooking pot 4 is connected below the first housing 51 and the second housing 52. The food materials are put into the cooking pot 4 through the first feed port 511 and the second feed port 521.

Specifically, in order to facilitate the feeding of the food material box 1, the speed reduction motor is mounted on the side of the second feed port 521 of the second housing 52, and the film-uncovering rotation shaft 31 is connected to the speed reduction motor. In addition, the film-uncovering rotation shaft 31 is mounted on the second feed port 521 of the second housing 52, when the speed reduction motor drives the film-uncovering rotation shaft 31 to rotate, the seal film 12 on the food material box 1 is torn and wound on the film-uncovering rotation shaft 31. The food materials in the food material box 1 are automatically put into the cooking pot 4 from the feed port. Preferably, in order to facilitate to control the rotation of the film-uncovering rotation shaft 31 to uncover the seal film 12, the output torque of the speed reduction motor ranges from 2kgf.cm to 14kgf.cm.

Preferably, in order to facilitate the connection of the first housing 51 and the second housing 52, the first housing 51 is provided with an extension plate 512 for connecting the second housing 52, and the extension plate 512 is provided with a connection pin 513 and a connection lug 514 for fixing the second housing 52. Specifically, the connecting pin 513 has a hollow structure to facilitate communication with the outside air.

Further, the second housing 52 is provided with a guide groove 522 for slidingly engaging with the food material box 1, and the second feed port 521 is opened at the end of the guide groove 522. In detail, the infrared emitter and the infrared receiver are mounted at both sides of the guide groove 522 of the second housing 52. The food material box 1 is infrared triggered and positioned. After the power is turned on, the motor rotates the film-uncovering rotation shaft 31. And after the hook 311 is hitched to the food material box 1, the food material box 1 is pre-tensioned. Until the first sub-box 111 of the food material box 1 blocks the infrared ray, it is determined that the food material box 1 is placed in place. By using the infrared emitter and the infrared receiver installed at both sides of the guide groove 522 to trigger and position the food material box 1, automatic segmented feeding of the food materials can be realized.

In addition, the hook 311 is preferably arranged at the intermediate section of the film-uncovering rotation shaft 31 so as to hitch to the hitching opening 121 of the food material box 1 and to drive the box body 11 to move forward. Of course, the position of the hitching opening 121 of the food material box 1 corresponds to the position of the hook 311.

When in use, the food material box 1 is placed in the guide sleeve 522 of the second housing 52. When the cooking device is turned on, the motor of the film-uncovering assembly 3 drives the film-uncovering rotation shaft 31 to rotate, and the hook 311 placed at the intermediate section of the film-uncovering rotation shaft 31 hitches to the food material box 1 until the infrared sensor determines that the food material box 1 is in place. And after the cooking command is started, the film-uncovering rotation shaft 31 rotates to uncover film during the rotation, such that the seal film 12 under the food material box 1 is torn and wound on the shaft, and the box body 11 is driven at the same time to move along the guide groove 522 towards the first feed port 511 and the second feed port 521, and the food materials are automatically put into the cooking pot 4 from the feed port under their own gravities.

When the feeding is completed, the speed reduction motor rotates reversely first, the speed reduction motor is disengaged from the film-uncovering rotation shaft 31, and the film-uncovering rotation shaft 31 is able to freely rotate. And the retreat operation of the food material box 1 can be completed by manually pulling out the heat seal film wound on the film-uncovering rotation shaft and the box body 11.

It should be noted that the seal film 12, the infrared sensor 2, the speed reduction motor, the shaft sleeve 33 and the clutch shaft rod 341 in the embodiment of the present disclosure can implemented using existing conventional means to realize the corresponding functions, and it will not be repeatedly described here.

### Embodiment 2

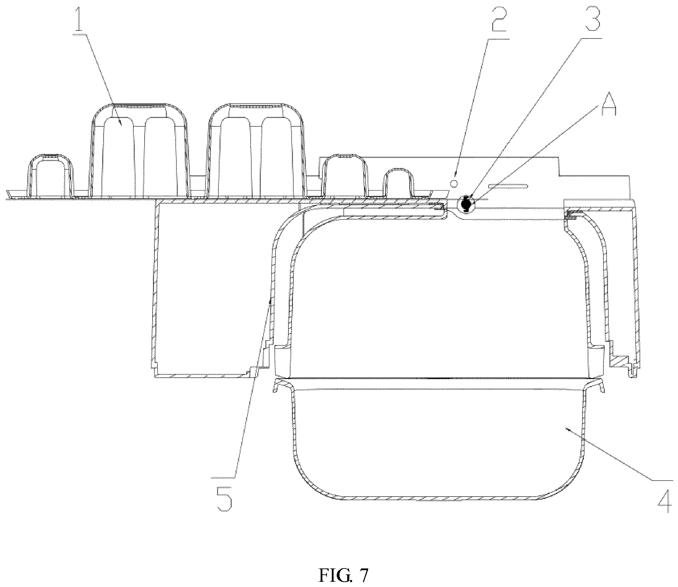

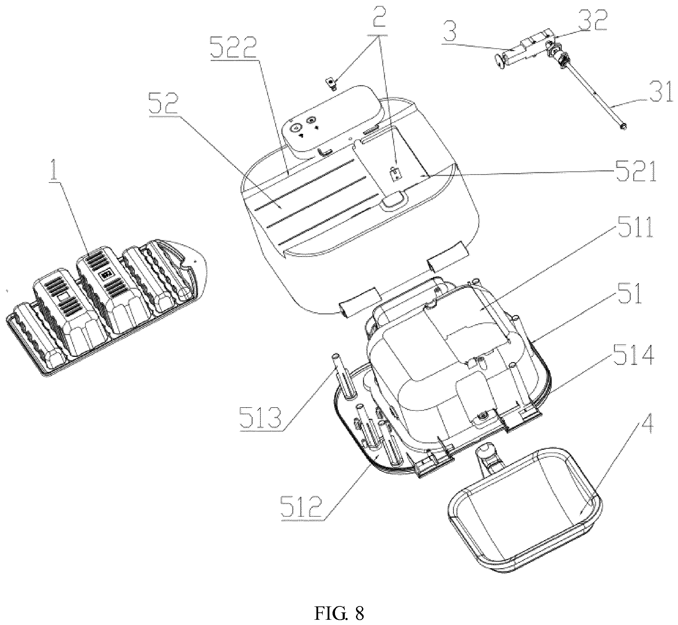

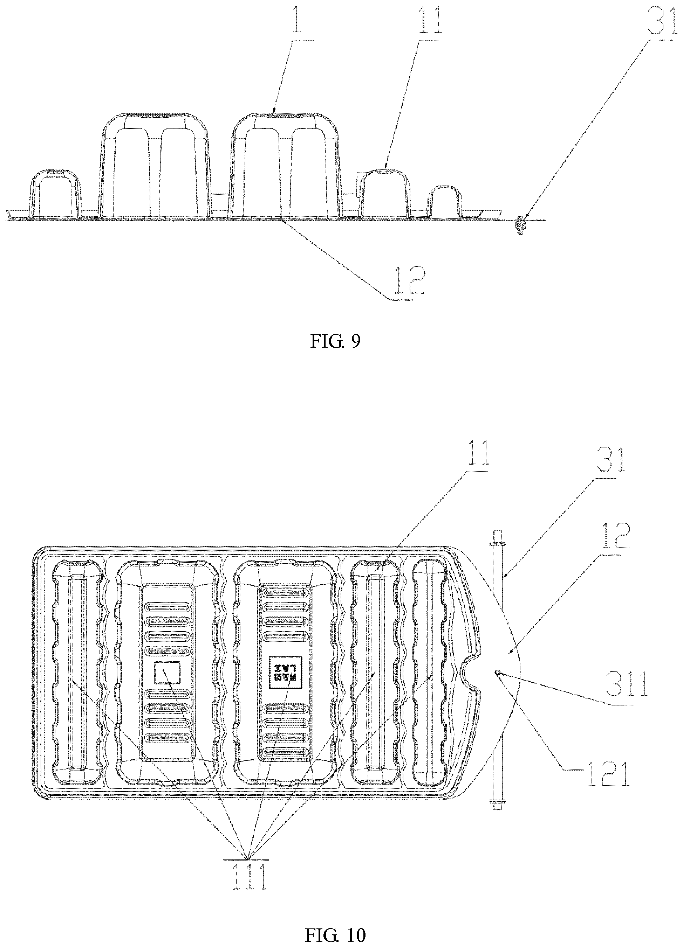

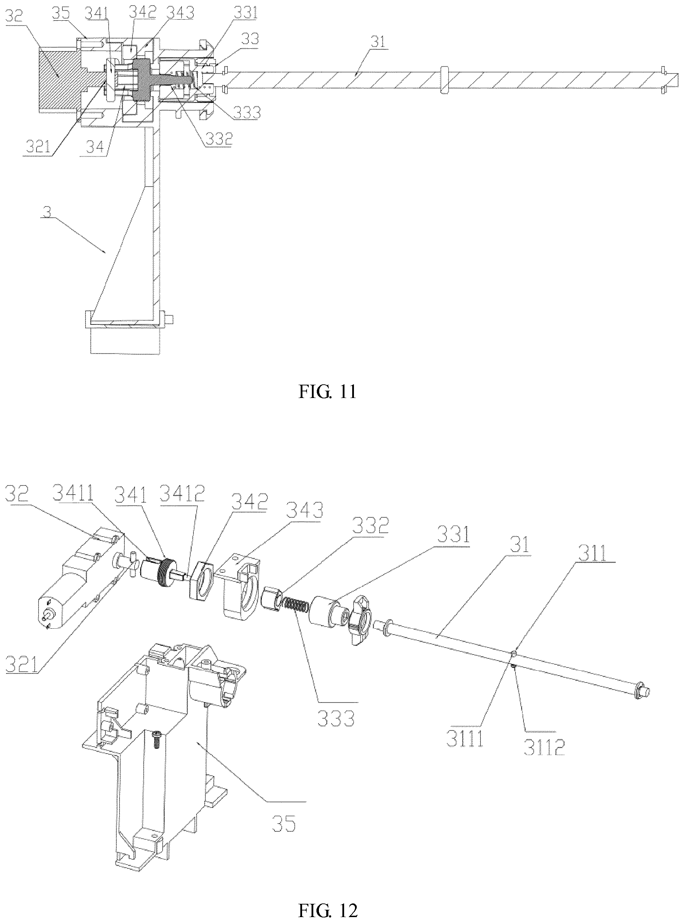

Another embodiment according to the present disclosure differs from the first embodiment only in that: referring to FIG. 7 to FIG. 13, preferably, referring to FIG. 11 and FIG. 12, the output shaft of the drive device 32 is fitted with a pin 321 and the other end of the pin 321 are connected to the clutch 34 to transmit the rotation power of the drive device 32 to the clutch 34. The arrangement of the pin 321 helps to transmit the rotation power to the clutch 34 more smoothly, and the sliding frictional resistance with the clutch 34 can be reduced. It should be noted that the transmission structure adopted in the prior art is generally a flat structure, which has a disadvantage that the friction is relatively large and is easily stuck.

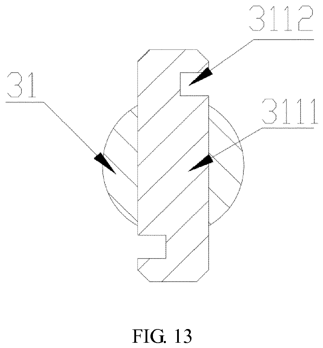

Preferably, one end of the clutch shaft rod 341 engaging with the output shaft of the drive device 32 is provided with a notch 3411 that cooperates with the pin 321. The other end of the clutch shaft rod 341 is provided with a guide cylinder 3412. Preferably, the diameter of the guide cylinder 3412 is 2mm∼4 mm. The diameter of the guide cylinder 3412 can be set to any value between 2 mm and 4 mm. For example, the diameter of the guide cylinder 3412 may be 2 mm, 3 mm or 4 mm, preferably is 3 mm. Specifically, referring to FIG. 13, the hook 311 includes a penetration rod 3111 passing through the film-uncovering rotation shaft 31. The end of the penetrating rod 3111 is provided with a hitch groove 3112.

It should be noted that parts with the same structure as those of the first embodiment are not repeatedly described here.

The above description is only some preferred embodiments of the present disclosure and is not intended to limit the present disclosure. Any modifications, equivalent substitutions and improvements made within the spirit and principles of the present disclosure are included in the protection scope of the present application.

## Claims

1. A film-uncovering and material-feeding mechanism for feeding food material to a cooking pot, comprising a food material box, a film-uncovering assembly and a connection housing assembly configured to support the food material box and the film-uncovering assembly;
wherein,
the connection housing assembly is provided with a feed port configured to feed a food material into the cooking pot;
the food material box comprises a box body movably connected to the connection housing assembly and configured to accommodate the food material, and a seal film provided between the box body and the connection housing assembly and configured to seal the box body, the seal film is provided with a hitching opening; and
the film-uncovering assembly comprises a film-uncovering rotation shaft and a drive device configured to drive the film-uncovering rotation shaft to rotate, and the film-uncovering rotation shaft is provided with a hook configured to be hitched with the hitching opening to uncover the seal film via rotation and to drive the box body to move towards the feed port.

2. The film-uncovering and material-feeding mechanism according to claim 1, wherein the film-uncovering assembly further comprises a shaft sleeve connected to the film-uncovering rotation shaft, a clutch connected to the drive device, and a first holder connected to the connection housing assembly and configured to secure the shaft sleeve and the clutch, and the drive device drives the clutch to rotate in a forward or reverse direction to cause the clutch to be engaged with or disengaged from the shaft sleeve.

3. The film-uncovering and material-feeding mechanism according to claim 1, wherein the clutch comprises a clutch shaft rod, a clutch nut that is screw-fitted with the clutch shaft rod and a second holder configured to secure the clutch nut, and the second holder is mounted on the first holder.

4. The film-uncovering and material-feeding mechanism according to claim 1, wherein the shaft sleeve comprises an inner sleeve configured to secure the film-uncovering rotation shaft and a movable sleeve fitted in the inner sleeve and configured to be connected with or disengaging from the clutch shaft rod, and a spring is provided between the inner sleeve and the movable sleeve.

5. The film-uncovering and material-feeding mechanism according to claim 1, wherein the box body comprises a plurality of sub-boxes that are independent from one another and of different volumes.

6. The film-uncovering and material-feeding mechanism according to any one of claims 1 to 4, wherein the connection housing assembly is provided with an infrared sensor for triggering and positioning the food material box, and the infrared sensor comprises an infrared emitter and an infrared receiver.

7. The film-uncovering and material-feeding mechanism according to any one of claims 1 to 4, wherein the connection housing assembly comprises a first housing and a second housing sleeved outside the first housing, the first housing is provided with a first feed port, the second housing is provided with a second feed port corresponding to the first feed port, the food material box is movably connected to the second housing, and the cooking pot is connected below the first housing and the second housing.

8. The film-uncovering and material-feeding mechanism according to claim 7, wherein the first housing is provided with an extension plate configured to be connected with the second housing, and the extension plate is provided with a connection pin and a connection lug for fixing the second housing.

9. The film-uncovering and material-feeding mechanism according to claim 7, wherein the second housing is provided with a guide groove configured to be slidingly engaged with the food material box, and the second feed port is opened at one end of the guide groove.

10. The film-uncovering and material-feeding mechanism according to any one of claims 2 to 4, wherein an output shaft of the drive device is fitted with a pin and another end of the pin is connected to the clutch to transmit the rotation power of the drive device to the clutch.

11. The film-uncovering and material-feeding mechanism according to claim 10, wherein one end of the clutch shaft rod engaging with the output shaft of the drive device is provided with a notch that cooperates with the pin, and the other end of the clutch shaft rod is provided with a guide cylinder.

12. The film-uncovering and material-feeding mechanism according to any one of claims 1 to 4, wherein the hook comprises a penetration rod passing through the film-uncovering rotation shaft, and an end of the penetrating rod is provided with a hitch groove.

13. The film-uncovering and material-feeding mechanism according to claim 3, wherein the drive device is a speed reduction motor, and an output torque of the speed reduction motor ranges from 2kgf.cm to 14kgf.cm.

14. The film-uncovering and material-feeding mechanism according to claim 13, wherein the clutch nut is a hex nut, an outer ring of the clutch shaft rod has an external thread, the hex nut has an internal thread matching with the external thread.

15. The film-uncovering and material-feeding mechanism according to any one of claims 1 to 4, wherein the hook is arranged at the intermediate section of the film-uncovering rotation shaft, with the position of the hitching opening corresponding to the position of the hook.
